**Europäisches Patentamt**

**European Patent Office**

**Office européen des brevets**

(19)

(11) Veröffentlichungsnummer: **0 084 101**
**A2**

(12) **EUROPÄISCHE PATENTANMELDUNG**

(21) Anmeldenummer: **82111059.0**

(22) Anmeldetag: **30.11.82**

(51) Int. Cl.³: **F 16 F 1/18**
**B 32 B 17/04**

(30) Priorität: **14.01.82 DE 3200877**

(43) Veröffentlichungstag der Anmeldung:
**27.07.83 Patentblatt 83/30**

(84) Benannte Vertragsstaaten:
**FR GB IT**

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Prochaska, Wolfgang, Dipl.-Ing.**
**Klingerstrasse 15**
**D-8000 München 70(DE)**

(72) Erfinder: **Schulz, Ralf-Ihilo, Dipl.-Ing.**
**Ödenstockacher Strasse 3**
**D-8011 Putzbrunn(DE)**

(54) **Verfahren und Vorrichtung zum Herstellen von Blattfedern aus faserverstärkten Werkstoffen sowie derart hergestellte Blattfedern.**

(57) Die Erfindung bezieht sich auf ein Verfahren und eine Vorrichtung zum Herstellen von Blattfedern aus faserverstärkten Werkstoffen in Form von Laminaten sowie auf eine solcherart hergestellte Blattfeder. Mit der Erfindung sollen die herkömmlichen, durch umfangreiche Handarbeit komplizierten und langwierigen Fertigungsmethoden vereinfacht werden. Hierzu werden die Blattfedern (1a, 1b, 1c) aus mehreren zumindest teilweise ausgehärteten, einzelne Laminatlagen bildenden Platten, z. B. Laminatplatten (2) aufgebaut, zwischen denen jeweils eine Klebeschicht (3, 2c, 2e) vorgesehen. ist. Als Platten werden vorzugsweise dünne ausgehärtete Laminatplatten verwendet; als Klebeschichten können Prepregschichten ebenso wie Klebefolien verwendet werden. In die Schichtanordnung können auch noch Dämpfungsschichten (4) z.B. aus gummielastischem Material, integriert werden. Mit einem Verfahren gemäß der Erfindung können Blattfedern mit hoher Reproduzierbarkeit hinsichtlich ihrer Federeigenschaften hergestellt werden.

FIG. 4

Messerschmitt-Bölkow-Blohm
Gesellschaft
mit beschränkter Haftung
München

Ottobrunn, den 08.01.82
BT01 Hi/Cz - 9145 -

Verfahren und Vorrichtung zum Herstellen von Blattfedern
aus faserverstärkten Werkstoffen sowie derart hergestellte
Blattfeder

Die Erfindung bezieht sich auf ein Verfahren und eine Vorrichtung zum Herstellen von Blattfedern aus faserverstärkten Werkstoffen sowie auf eine derart hergestellte Blattfeder gemäß den Oberbegriffen der unabhängigen Patentansprüche.

Blattfedern aus mehreren Laminatschichten aus faserverstärkten Werkstoffen haben gegenüber Blattfedern aus herkömmlichen Materialien den Vorteil geringen Gewichtes und gleichzeitig hoher Haltbarkeit. Außerdem kann durch Auswahl des jeweilig verwendeten Laminates und durch Ausrichtung der Fasern in den einzelnen Schichten die Federcharakteristik in weiten Grenzen beeinflußt werden.

Blattfedern aus mehreren Laminatschichten sind z.B. aus der DE-OS 27 31 577 bekannt.

0084101

Im allgemeinen werden Blattfedern aus faserverstärkten Werkstoffen aus sogenannten Naßlaminaten bzw. Prepregs hergestellt, die mit der gewünschten Faserausrichtung übereinandergeschichtet und anschließend verpreßt und ausgehärtet werden. Bei relativ großer Laminatdicke kann die Ausrichtung der Fasern bei der Verpressung nicht immer in genügend hohem Maße eingehalten werden. Ebenso ist wegen des hohen Bindemittelanteils der Faseranteil nur begrenzt. Bei Blattfedern wird jedoch ein möglichst großes Faservolumen angestrebt.

Bei der Fertigung von Blattfedern müssen die einzelnen Lagen aus faserverstärkten Werkstoffen, so z. B. Naßlaminate in eine Preßform eingelegt und unter Umständen vor dem eigentlichen Preß- und Aushärtvorgang noch ausgerichtet werden. Durch Handarbeiten wird die Herstellgeschwindigkeit für solche Blattfedern begrenzt und eine rationelle Massenfertigung erschwert. Außerdem muß bedacht werden, daß bei der Arbeit mit Naßlaminaten durch die flüchtigen und sehr geruchsintensiven Bindemittel das Fertigungspersonal belästigt wird; beim Umgang mit den Naßlaminaten muß außerdem sehr sauber gearbeitet werden.

Der Erfindung liegt die Aufgabe zugrunde, ein Verfahren und eine Vorrichtung zum Herstellen von Blattfedern aus faserverstärktem Werkstoff anzugeben, mit denen die Herstellung wesentlich vereinfacht und zudem die Eigenschaften der Blattfedern bereits bei der Herstellung besser kontrolliert werden können, so daß Blattfedern mit hoher Reproduzierbarkeit der Federeigenschaften hergestellt werden können.

Diese Aufgabe ist gemäß der Erfindung durch die in den kennzeichnenden Teilen der unabhängigen Patentansprüche angegebenen Merkmale gelöst.

Zur Herstellung von Blattfedern gemäß der Erfindung werden demnach zumindest teilweise ausgehärtete dünne Platten, so z. B. ein- oder mehrlagige Laminatplatten oder Gewebeplatten verwendet, die jeweils unter Zwischenschaltung einer Klebeschicht in einer Preßform übereinandergeschichtet und anschließend miteinander verpreßt und ausgehärtet werden. Praktisch ausgehärtete Laminatplatten können auch bei sehr geringen Schichtstärken relativ problemlos gehandhabt werden, so daß bei der Fertigung das Einlegen der einzelnen Schichten in die Preßform bereits dadurch wesentlich vereinfacht wird.

Als Klebeschichten zwischen den ausgehärteten Platten bzw. Laminaten kann Bindemittel vorgesehen werden, das auf die in die Preßform eingelegten Laminate aufgetragen wird. Wesentlich günstiger ist es jedoch, zwischen den jeweils ausgehärteten Platten Klebefolien einzulegen. Auf diese Weise kann der Einsatz von Harzen als Bindemittel mit den erwähnten unangenehmen Nebenerscheinungen, wie starker Geruch, aber auch Verursachen von Allergien oder dergleichen, praktisch vermieden werden. Als Klebeschichten können jedoch auch Prepregs verwendet werden, bzw. andere noch nicht ausgehärtete Laminatschichten, die zwischen die ausgehärteten dünnen Laminatmatten eingelegt werden. Bei der Verpressung übernimmt dann das in den teilweise nassen Laminatschichten vorhandene Bindemittel die Verbindungsfunktion zwischen den einzelnen Schichten.

Durch die Verwendung von ausgehärteten dünnen Laminaten kann die Faserverteilung in den einzelnen Laminatschichten wesentlich besser beherrscht werden, da die Faserverteilung in den ausgehärteten Laminatmatten auch bei dem Preßvorgang nicht verändert wird. Sowohl die Faserausrichtbarkeit als auch der Faseranteil wird auf diese Weise gegenüber auf herkömmliche Weise aus faserverstärkten Werkstoffen gefertigten Blattfedern verbessert. Außerdem können durch die Verwendung von ausgehärteten Laminaten die Federeigenschaften der derart hergestellten Blattfedern wesentlich genauer bestimmt und auch kontrolliert werden. So können z.B. durch Variation der Faserdicke, der Faserart und des Fasergehaltes in den Platten Steifigkeit und Festigkeit von Laminaten besser ausgenutzt werden, um auf diese Weise eine geringe Federmasse und eine hohe Lebensdauer für die Blattfedern zu erzielen. Außerdem kann auf diese Weise auch der Querschnitt der Blattfedern wesentlich besser und in breiterem Rahmen variiert werden als bei der Herstellung von Blattfedern aus Naßlaminaten. Insgesamt wird bei einem Verfahren gemäß der Erfindung der Ausschuß geringer und damit das Fertigungsrisiko kleiner.

Die Fertigungsgeschwindigkeit für Blattfedern aus Laminatschichten kann weiterhin gesteigert werden, wenn als Preßvorrichtung eine Vorrichtung gewählt wird, in die nicht nur Laminatschichten für eine Blattfeder, sondern durch Zwischenschalten von Zwischenpreßformen mehrere Schichtanordnungen für Blattfedern eingelegt werden können. Durch die Verwendung von ausgehärteten Laminatmatten können auch relativ große Laminaten für die Herstellung von Blattfedern verwendet werden. Nach dem Verpressen und Aushärten der einzelnen Schichten werden dann die Blattfedern aus den verpreßten Laminatschichten herausgesägt.

Weitere Ausgestaltungen und Vorteile der Erfindung gehen aus den Unteransprüchen in Verbindung mit der nachfolgenden Beschreibung hervor, in der die Erfindung anhand der Zeichnung näher erläutert ist. In der Zeichnung stellen dar:

Figur 1    eine Ansicht einer gemäß der Erfindung hergestellten Blattfeder;

Figur 2    eine Einzelheit der Blattfeder in Figur 1 zur
Verdeutlichung des Aufbaus der Blattfeder;

Figur 3    eine der Figur 2 entsprechende Ansicht einer
Blattfeder mit einem anderen Aufbau;

Figur 4    eine weitere der Figur 2 entsprechende Darstellung
einer Blattfeder mit einem weiteren unterschiedlichen Aufbau der einzelnen Laminatschichten;

Figur 5    eine schematische Darstellung einer Vorrichtung
zum Herstellen von Blattfedern gemäß der Erfindung.

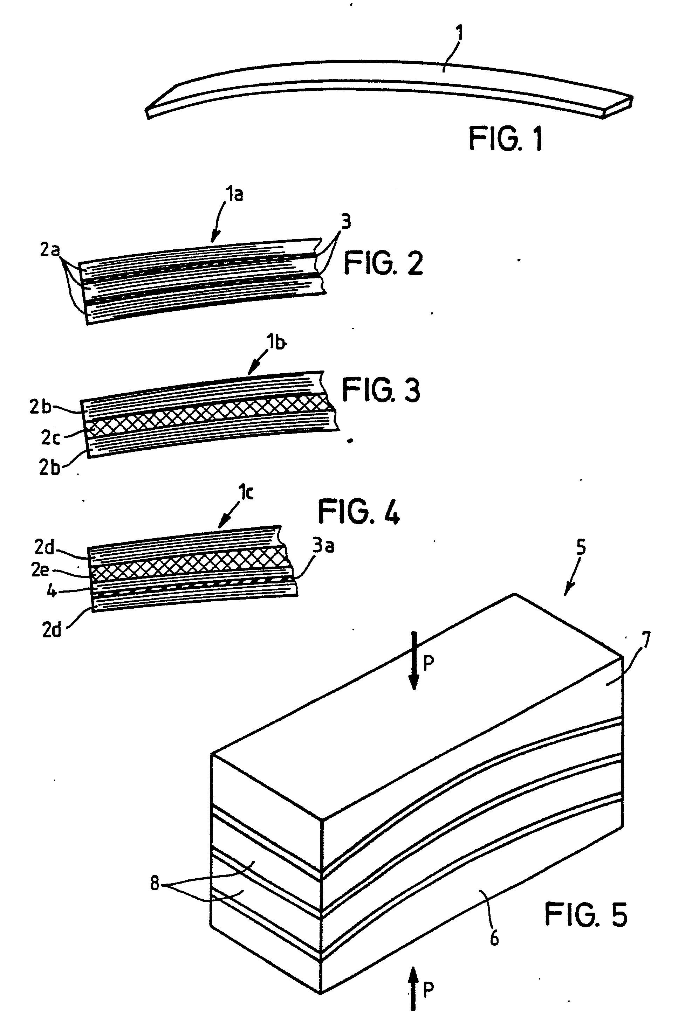

Die in Figur 1 dargestellte einfache Blattfeder 1 in Form eines
gebogenen Laminatstreifens ist aus mehreren Schichten z. B.
aus Glasfasern aufgebaut.

Wie in Figur 2 dargestellt, besteht die dort gezeigte Blattfeder 1a aus drei übereinander gelegten Laminatschichten 2a,
zwischen denen jeweils eine Klebefolie 3 eingelegt ist. Die
Laminatschichten 2a sind hierbei jeweils dünne Platten eines
ausgehärteten Laminates, die problemlos gehandhabt werden
können. Die gezeigte Schichtanordnung wird in einer weiter
unten zu beschreibenden Preßform verpreßt und anschließend
ausgehärtet.

Die Vorzugsfaserrichtung in den drei Laminatschichten der
Blattfeder 1a werden für den jeweiligen Anwendungsfall ausgewählt. So ist es z. B. möglich, die Faserrichtungen in der
oberen und unteren Deckschicht in Längsrichtung der Blattfeder zu legen und die Vorzugsfaserrichtung der mittleren Laminatschicht quer dazu zu wählen.

Die in Figur 3 gezeigte Blattfeder 1b besteht wiederum aus drei Laminatschichten, und zwar aus einer oberen und unteren Laminatschicht 2b aus einer ausgehärteten dünnen ein- oder mehrlagigen Laminatplatte und einer zwischen diese beiden Deckschichten gelegte Schicht 2c aus Prepregs, d. h. vorimprägnierten Laminaten. Die Prepregschicht 2c übernimmt bei der Verpressung der Schichtanordnung die Verbindungsfunktion, so daß für dieses Ausführungsbeispiel keine eigenen Klebefolien verwendet werden müssen.

Die Blattfeder 1c gemäß Figur 4 weist als obere und untere Deckschichten wiederum aus ausgehärteten dünnen Laminatplatten zugeschnittene Schichten 2d auf. Auf die untere Deckschicht 2d ist eine Klebefolie 3a gelegt, an die sich eine Dämpfungsschicht 4 anschließt. Diese Dämpfungsschicht besteht z. B. aus einer Gummischicht, die zusätzlich mit z. B. Glasfasern enthaltenden Beschichtung kaschiert sein kann. Auf diese Dämpfungsschicht 4 ist wiederum eine Schicht 2e aus Prepregs gelegt, die von der oberen Deckschicht 2d abgedeckt ist. Die Prepregschicht 2e übernimmt dabei bei der Verpressung der Schichtanordnung die Verbindung zwischen oberer Deckschicht 2d und Dämpfungsschicht 4. Es können auch mehrere Dämpfungsschichten 4 in die Schichtanordnung integriert werden, wodurch die Feder- und Dämpfungseigenschaften der Blattfedern in weiten Grenzen eingestellt werden können.

Zur Herstellung der beschriebenen und anderer Blattfedern aus faserverstärkten Werkstoffen dient eine in Figur 5 dargestellte Vorrichtung 5. Diese Vorrichtung 5 weist eine untere Preßform 6, deren Oberseite der unteren Blattfederkontur angepaßt ist, sowie eine obere Preßform 7 auf, deren Unterseite der oberen Blattfederkontur angepaßt ist. Auf die untere Preßform 6 werden dann Laminatplatten und entsprechende Klebe- und Dämpfungsschichten, wie zu den obigen Figuren beschrieben, gelegt; anschließend kann die obere Preßform 7 auf diese Schichtanordnung gesetzt werden, und die Schichtanordnung mit bestimmtem Preßdruck P verpreßt werden. Ist die Schichtanordnung ausgehärtet, können aus ihr Blattfedern zugeschnitten werden.

Die Kapazität der Preßvorrichtung 5 kann erweitert werden, wenn zwischen die obere und untere Preßform 6 bzw. 7 weitere Zwischenpreßformen 8, z. B. in Art von Formblechen eingelegt werden, deren Unterseite jeweils der oberen Blattfederkontur und deren Oberseite jeweils der unteren Blattfederkontur angepaßt ist. Anstatt die obere Preßform 7 direkt auf die untere Preßform 6 zu legen, werden mehrere Zwischenpreßformen und Laminatanordnungen in die Vorrichtung eingelegt, bis, in dem gezeigten Falle nach drei Laminatschichtanordnungen, die obere Preßform 7 in die Vorrichtung eingesetzt wird. Auf diese Weise können gleichzeitig drei Schichtanordnungen in einer Vorrichtung hergestellt werden. Aus jeder dieser Schichtanordnungen können dann entsprechend viele Blattfedern herausgeprägt werden.

In den Figuren sind zwar nur Blattfederausschnitte mit konstantem Querschnitt gezeigt, jedoch können durch Wahl von ausgehärteten Laminaten mit variabler Länge selbstverständlich auch variable Federquerschnitte erzeugt werden. Andere Federquerschnitte können auch durch sich nur teilweise überlappende Laminatschichten erzeugt werden.

Messerschmitt-Bölkow-Blohm
Gesellschaft
mit beschränkter Haftung
München

Ottobrunn, den 08.01.82
BT01 Hi/Cz   - 9145 -

Verfahren und Vorrichtung zum Herstellen von Blattfedern
aus faserverstärkten Werkstoffen sowie derart hergestellte
Blattfeder

## Patentansprüche

1. Verfahren zum Herstellen von Blattfedern aus mehreren
miteinander verpreßten Laminatschichten aus faserverstärkten Werkstoffen, dadurch g e k e n n z e i c h -
n e t , daß dünne, zumindest teilweise ausgehärtete
Platten (2a, 2b, 2c, 2d, 2e), zwischen denen jeweils
Klebeschichten (3, 3a, 2c, 2e) vorgesehen werden,
übereinandergeschichtet werden, und daß diese Schichtanordnung gepreßt und zum Laminat ausgehärtet wird.

-2-

2. Verfahren nach Anspruch 1, dadurch gekennzeichnet, daß zumindest als Deckschichten vollständig ausgehärtete Laminatplatten (2a, 2b, 2d) verwendet werden.

3. Verfahren nach einem der vorhergehenden Ansprüche, dadurch gekennzeichnet, daß als Klebeschichten Klebefolien (3, 3a) verwendet werden.

4. Verfahren nach einem der vorhergehenden Ansprüche, dadurch gekennzeichnet, daß als Klebeschichten noch nicht ausgehärtetes Laminat (2c, 2e) verwendet wird.

5. Verfahren nach Anspruch 4, dadurch gekennzeichnet, daß als Laminat Prepregs (2c, 2e) verwendet werden.

6. Verfahren nach einem der vorhergehenden Ansprüche, dadurch gekennzeichnet, daß in die Schichtanordnung der Blattfeder (1c) zumindest eine Dämpfungsschicht (4) aus gummielastischem Material integriert wird.

7. Verfahren nach Anspruch 6, dadurch gekennzeichnet, daß die Dämpfungsschicht (4) aus gummielastischem Material mit einem faserverstärkten Werkstoff kaschiert wird.

8. Vorrichtung zur Durchführung des Verfahrens nach einem der vorhergehenden Ansprüche zum Herstellen von Blattfedern aus mehreren miteinander verpreßten Laminatschichten aus faserverstärkten Werkstoffen, dadurch gekennzeichnet, daß die Vorrichtung (5) eine der unteren Blattfederkontur angepaßte untere Preßform (6), eine der oberen Blattfederkontur angepaßte obere Preßform (7) sowie zumindest eine Zwischenpreßform (8) aufweist, deren untere Seite der oberen Blattfederkontur und deren obere Seite der unteren Blattfederkontur angepaßt ist.

-2-

9. Vorrichtung nach Anspruch 8, dadurch gekennzeichnet, daß die Zwischenpreßformen (8) Formbleche sind.

10. Blattfeder aus mehreren miteinander durch ein Bindemittel verbundenen und verpreßten Laminatschichten aus faserverstärkten Werkstoffen, dadurch gekennzeichnet, daß die Blattfeder (1) aus mehreren, zumindest teilweise ausgehärteten dünnen Platten (2) und zwischen diesen vorgesehenen Klebeschichten (3, 2c, 2e) zusammengesetzt ist.

11. Blattfeder nach Anspruch 10, dadurch gekennzeichnet, daß zumindest die als Deckschichten verwendeten Platten (2a, 2b, 2d) vollständig ausgehärtete Laminate sind.

12. Blattfeder nach einem der Ansprüche 10 und 11, dadurch gekennzeichnet, daß die Klebeschichten Klebefolien (3, 3a) sind.

13. Blattfeder nach einem der Ansprüche 10 und 11, dadurch gekennzeichnet, daß die Klebeschichten nicht ausgehärtete Laminate (2c, 2e) sind.

14. Blattfeder nach Anspruch 13, dadurch gekennzeichnet, daß das nicht ausgehärtete Laminat Schichten aus Prepregs (2c, 2e) sind.

15. Blattfeder nach einem der Ansprüche 10 bis 14, dadurch gekennzeichnet, daß in die Schichtanordnung eine Dämpfungsschicht (4) integriert ist.

16. Blattfeder nach Anspruch 15, dadurch gekennzeichnet, daß die Dämpfungsschicht (4) aus gummielastischem Material ist.

-4-

17. Blattfeder nach einem der Ansprüche 15 und 16, dadurch gekennzeichnet, daß die Dämpfungsschicht (4) mit faserverstärkten Werkstoffen kaschiert ist.

0084101

1/7

FIG. 1

FIG. 2

FIG. 3

FIG. 4

FIG. 5

145